# EUROPÄISCHE PATENTSCHRIFT

(11) **EP 0 437 674 B1**
(45) Veröffentlichungstag und Bekanntmachung des Hinweises auf die Patenterteilung: **27.10.1993**
(21) Anmeldenummer: 90116957.3
(22) Anmeldetag: 04.09.1990
(51) Int. Cl.: B62D 7/14, B60G 3/20

(54) **Radaufhängung für lenkbare Hinterräder von Kraftfahrzeugen**
Suspension for the steerable rear wheels of a motorized vehicle
Suspension des rous arrières directrices d'un véhicule motorisé

(30) Priorität: 13.12.1989 DE 3941083
(43) Veröffentlichungstag der Anmeldung: 24.07.1991
(73) Patentinhaber: Dr.Ing.h.c. F. Porsche Aktiengesellschaft, 70435 Stuttgart (DE)
(72) Erfinder: Moll, Patrick, D-8000 München 81 (DE)

(56) Entgegenhaltungen:
- EP-A- 0 277 649
- EP-A- 0 278 095
- EP-A- 0 339 479
- DE-A- 3 642 421
- GB-A- 2 177 983
- GB-A- 2 180 206
- W. Matschinsky "Die Radführungen der Strassenfahrzeuge" 1987, Verlag TÜV Rheinland GmbH, Köln

## Beschreibung

Die Erfindung bezieht sich auf eine Radaufhängung für lenkbare Hinterräder von Kraftfahrzeugen nach dem Oberbegriff des Anspruchs 1.

Es sind Hinterradaufhängungen für Kraftfahrzeuge bekannt, bei denen Einrichtungen vorgesehen sind, die eine Verstellung des Hinterrads zur Erzielung eines Lenkwinkels bewirken. So ist z.B. aus der DE-A-3 630 984 ein mit dem Radträger verbundener Arm bekannt, der sich in Längsrichtung des Fahrzeugs erstreckt und an seinem freien Ende mit einem Stellelement verbunden ist, wobei der Radträger zwischen Gelenken von aufbauseitig gehaltenen und quer ausgerichteten Lenkerarmen verschwenkbar abgestützt wird. Bei einer solchen Anordnung ist die Lage des Stellelements aufgrund des mit dem Radträger verbundenen Armes räumlich im Fahrzeug festgelegt und nur mit relativ großem baulichem Aufwand veränderbar. Aus der EP-A-0 277 649 ist eine Radaufhängung für lenkbare Hinterräder gemäß dem Oberbegriff des Anspruchs 1 bekannt, die eine mit einem Lenkerarm verbundenes Stellelement umfasst, das unmittelbar mit dem Lenkerarm verbunden ist und eine Verstellung eines Radträgers um eine Schwenkachse, gebildet durch Lenkerarmlagerungen am Radträger, erfolgt.

Aus Gründen des verfügbaren Einbauraumes, aber auch aus kinematischen und elastokinematischen Gründen kann sich das Erfordernis ergeben, insbesondere bei einer Doppelquerlenkerachse, das Stellelement nicht unmittelbar mit dem Radträger zu verbinden.

Aufgabe der Erfindung ist es, eine Radaufhängung für lenkbare Hinterräder von Kraftfahrzeugen zu schaffen, bei der eine direkte Ansteuerung eines Radführungsgliedes zur Erzielung eines Hinterradeinschlagwinkels ermöglicht wird.

Diese Aufgabe wird erfindungsgemäß durch die Merkmale der Ansprüche 1 und 2 gelöst. Weitere, vorteilhafte Merkmale beinhalten die Unteransprüche.

Mit der erfindungsgemäßen Radaufhängung in Doppelquerlenker-Bauweise wird ein durch Umfangs- oder Seitenkräfte elastokinematisch reagierendes Rad geschaffen, das gleichzeitig zur Einstellung eines Hinterradlenkwinkels über ein Stellelement, wie z.B. einen hydraulischen Steuerzylinder, einen Stellmotor oder dergleichen Mittel entsprechend ansteuerbar ist.
Die beiden in übereinander liegenden Ebenen angeordneten Querlenker sind am Radträger sowie am Fahrzeugaufbau angelenkt und sind entweder in der unteren Ebene oder in der oberen Ebene durch einen zusätzlichen Stablenker ergänzt. Die Anordnung der Radführungsglieder ergibt unter Berücksichtigung der Lagerelastizitäten Schnittpunkte, welche eine elastokinematische Drehbewegung außerhalb der Radmittenlängsebene und - in bezug auf die Fahrtrichtung - hinter der Radmittenquerebene ergeben. Unter dem Einfluß von äußeren Kräften und Momenten in der Radaufstandsfläche dreht sich das Rad um eine diesen Pol in der Radaufstandsfläche bildende Schwenkachse. Der Betrag der Drehung, z.B. bei einer Vorspuränderung ist wesentlich von der Elastizität eines Steuerlagers zwischen dem Stellelement und einem Lenkerarm bzw. dem zusätzlichen Stablenker abhängig. Das Steuerlager ist außerdem zur aktiven Verstellung des Hinterradeinschlagwinkels über das Stellelement vorteilig und weist hierzu eine entsprechend definierte Kennung auf.

Je nach Ausführung der Doppelquerlenkerachse und der Verbindung des Stellelements mit einem der Lenkerarme, wird sich ein entsprechend aktiver Drehpol für das Rad im Schnittpunkt der Längsachsen der Lenkerarme der Radführungsglieder ausbilden. Der passive Drehpol der Radaufhängung wird durch die elastokinematische Schwenkachse gebildet und durch die Querlenker bestimmt.

Ausführungsbeispiele der Erfindung sind in der Zeichnung dargestellt und werden im folgenden näher beschrieben.

Es zeigen
Fig. 1 eine Ausführung einer schaubildlich dargestellten Doppelquerlenker-Radaufhängung mit einem oberen aufgelösten Dreieckslenker und einem unteren Dreieckslenker mit Stablenker,
Fig. 2 bis 7 Radaufhängungen mit einem oberen aufgelösten Querlenker und einem unteren Dreieckslenker, wobei der Stablenker - in bezug auf die Fahrtrichtung - vor oder hinter dem Dreieckslenker angeordnet sein kann und das Stellelement an einem der Lenkerarme des Dreieckslenkers angreift,
Fig. 8 und 9 Radaufhängungen mit einem oberen Dreieckslenker mit Stablenker und einem unteren aufgelösten Querlenker, wobei das Stellelement mit einem der Lenkerarme des oberen Dreieckslenkers verbunden ist.

Die Hinterradaufhängung eines Kraftfahrzeugs umfaßt im wesentlichen eine Radführung 1 aus zwei in übereinander liegenden Ebenen X und Z angeordneten Radführungsglieder 2, 3 bzw. 2a, 3a in Doppelquerlenkerbauweise. Mit der Radführung 1 ist zur Lenkung der Hinterräder 4 und 5, ein Stellelement 6, verbunden.

Nach einer ersten Ausführung besteht das untere Radführungsglied 3 aus einem Dreieckslenker mit zwei Lenkerarmen 12 und 13 und ist über ein einziges Gelenk 8 am Radträger 9 und über zwei Gelenke 10 und 11 bzw. 10 und 11a am Fahrzeugaufbau gehalten. Neben dem Dreieckslenker ist in einer annähernd gleichen horizontalen Ebene ein Stablenker 14 angeordnet, der in einem separaten Gelenk 15 am Radträger 9 und in einem weiteren Gelenk 16 am Fahrzeugaufbau angelenkt ist.

Das obere Radführungsglied 2 der ersten Ausführung umfaßt einen aus zwei Lenkerarmen 17 und 18 gebildeten aufgelösten Dreieckslenker, der über zwei Gelenke 19 und 20 am Radträger 9 und über zwei weitere Gelenke 21 und 22 am Fahrzeugaufbau schwenkbar gelagert ist.

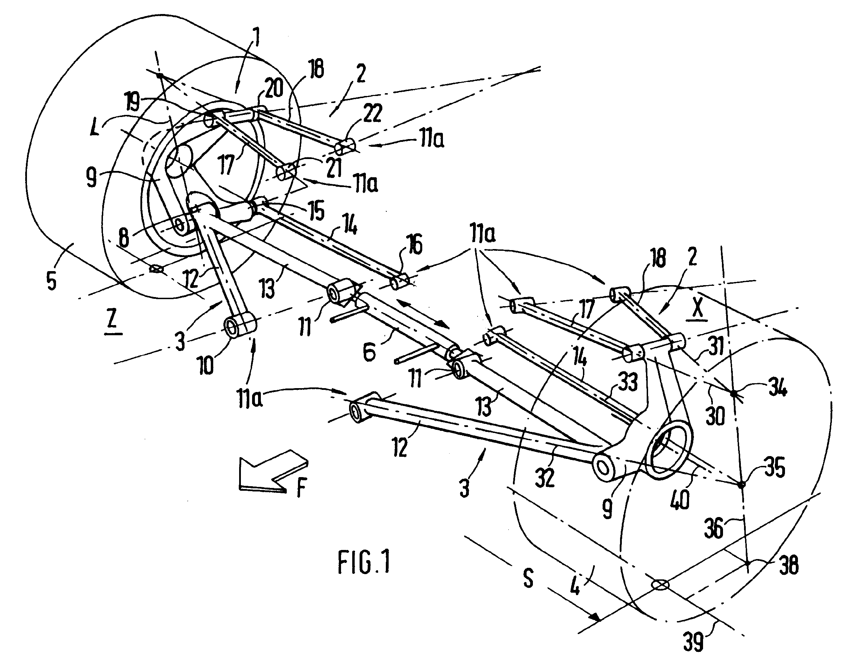

Das Stellelement 6 ist bei dieser Ausführung gemäß Fig. 1 - in bezug auf die Fahrtrichtung F - mit dem hinteren zweiten Lenkerarm 13 des Dreieckslenkers 3 verbunden. Die Verbindung des Stellelements 6 mit dem Lenkerarm 13 erfolgt über ein definiert elastisch ausgelegtes Steuerlager 11, welches z.B. von einem Gelenk gebildet wird.

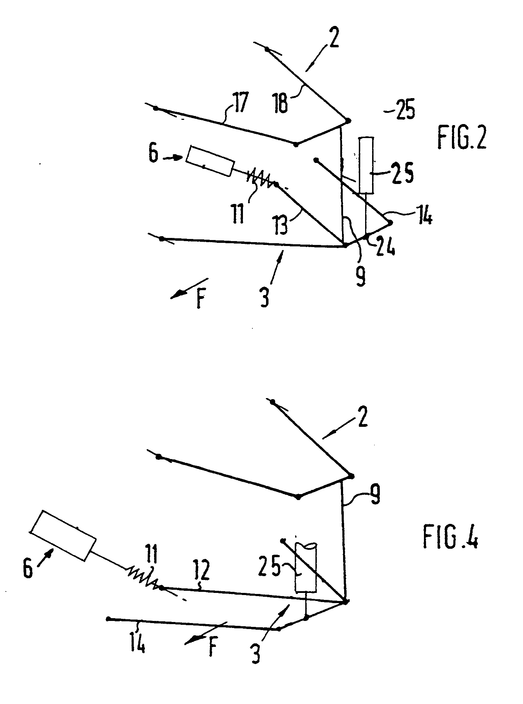

Diese Ausführung gemäß Fig. 1 entspricht im wesentlichen der Ausführung nach Fig. 2, bei der noch der untere Abstützpunkt 24 des Feder- und Dämpferbeins 25 am Radträger 9 dargestellt ist.

Nach der weiteren Ausführung gemäß Fig. 4 ist - in bezug auf die Fahrtrichtung F gesehen - der Stablenker 14 vor dem Dreieckslenker 3 angeordnet, wobei der vordere erste Lenkerarm 12 mit dem Stellelement 6 verbunden wird.

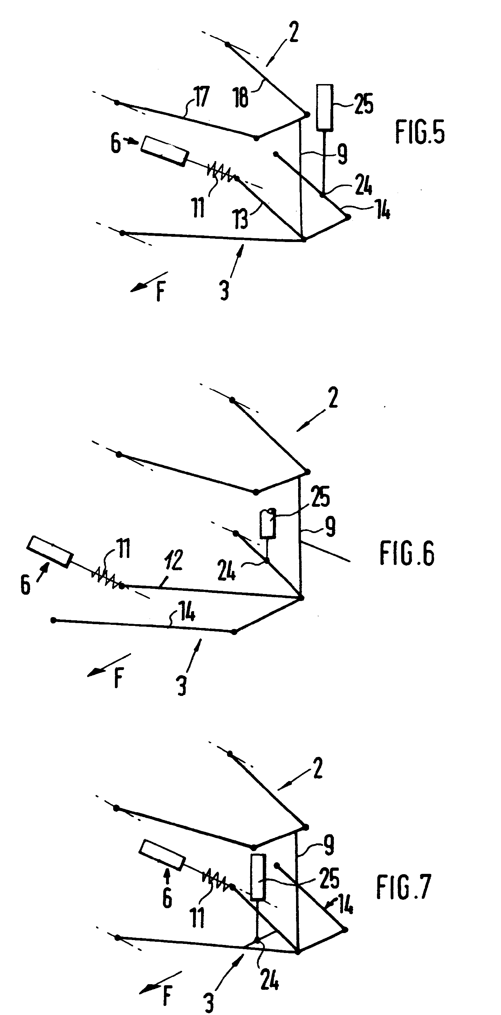

Nach einer weiteren Ausführung gemäß Fig. 5 ist bei einer Anordnung des Stablenkers 14 gemäß der Fig. 2 und 3 das Stellelement 6 mit dem hinteren zweiten Lenkerarm 13 des Dreieckslenkers 3 verbunden und das Feder- und Dämpferbein 25 ist am Stablenker 14 abgestützt.

Nach einer weiteren Ausführung gemäß Fig. 6 ist bei einer Anordnung des Stablenkers 14 gemäß der Fig. 4 das Stellelement 6 mit dem vorderen ersten Lenkerarm 12 verbunden, wobei sich das Feder- und Dämpferbein 25 am zweiten hinteren Lenkerarm 13 abstützt.

Nach einer weiteren Ausführung gemäß Fig. 7 stützt sich das Feder- und Dämpferbein 25 zwischen den beiden Lenkerarmen 12, 13 des Querlenkers 3 ab.

Der Stablenker 14 ist in den Ausführungsbeispielen parallelliegend zum jeweilig benachbarten Lenkerarm gezeichnet. Der Stablenker 14 kann auch unter einem Winkel zu dem benachbarten Lenkerarm stehen, d.h. entweder zur Innen- oder Außenseite divergierend angeordnet sein.

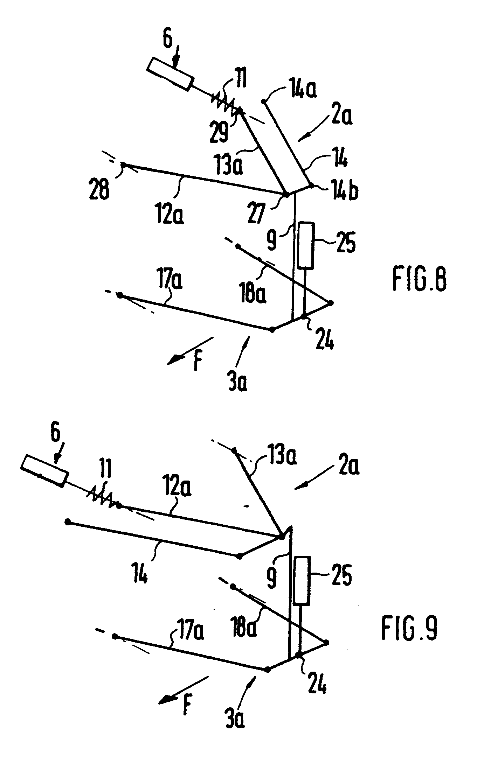

Nach weiteren Ausführungsformen gemäß der Fig. 8 und 9 umfasst das obere Radführungsglied 2a einen Dreieckslenker sowie den zusätzlichen Stablenker 14. Der Dreieckslenker ist über ein Gelenk 27 am Radträger 9 und über zwei weitere Gelenke 28 und 29 am Fahrzeugaufbau angelenkt, wobei der Stablenker 14 über ein erstes radträgerseitiges Lager 14b und über ein zweites aufbauseitiges Lager 14a abgestützt ist. Bei der Ausführung gemäß Fig. 8 ist - in bezug auf die Fahrtrichtung F - der hintere zweite Lenkerarm 13a mit dem Stellelement 6 verbunden und der Stablenker 14 ist benachbart des zweiten Lenkerarmes 13 angeordnet.

Nach der Ausführung gemäß Fig. 9 ist der Stablenker 14 vor dem oberen Radführungsglied 2a, immer in bezug auf die Fahrtrichtung F, angeordnet und das Stellelement 6 ist mit dem vorderen ersten Lenkerarm 12a verbunden.

Das Steuerlager 11 ist jeweils an einem Lenkerarm des Radführungsgliedes 2, 3 bzw. 2a, 3a vorgesehen, damit die Einstellung eines Hinterradlenkwinkels gewährleistet ist.

Die Längsachsen 30, 31 des oberen Radführungsgliedes 2; 2a und die Längsachsen 32, 33 der Lenkerarme 17, 18; 17a, 18a und 12, 13 und 12a, 13a bilden jeweils einen Schnitpunkt 34, 35, durch die eine elastokinematische Schwenkachse 36 für das Rad verläuft, wobei in der Radaufstandsebene sich ein Drehpol 38 ergibt, der - in bezug auf die Fahrtrichtung F - hinter der senkrechten Radmittenquerebene 39 und außerhalb der Spurweite S verläuft. Um diesen Radpol 38 verschwenkt sich das Rad bei auf das Rad von außen einwirkenden Kräften und je nach Verbindung des Stellelements 6 mit einem der Querlenker 2, 3 bzw. 2a, 3a um einen Pol, der vom Dreieckslenker gebildet wird.

Zum Lenken der Hinterräder 4 und 5 wird das Stellelement 6, z.B. ein hydraulischer Stellzylinder, angesteuert. Der Stablenker 14 ist - in bezug auf die Fahrtrichtung F - hinter der senkrechten Radmittenquerebene angeordnet, so daß sich das Rad 4 und 5 um eine Lenkdrehachse L verschwenkt, die durch den Punkt 34 sowie durch das Lager 8 des Dreieckslenkers 3 verläuft.

## Patentansprüche

1. Radaufhängung für lenkbare Hinterräder von Kraftfahrzeugen mit einem das Rad (4 und 5) lagernden Radträger (9), der mit dem Fahrzeugaufbau über Radführungsglieder (2, 3) verbunden ist, die jeweils mehrere Lenkerarme (17,18 und 12,13) umfassende obere und untere Querlenker aufweisen, und über ein Stellelement (6) der Radträger (9) um eine Schwenkachse (L) verstellbar ist, dadurch gekennzeichnet, daß der obere Querlenker aus einem aufgelösten Dreieckslenker (17,18) besteht und das untere Radführungsglied (3) aus einem an zwei Stellen am Fahrzeugaufbau angelenkten am Fahrzeugaufbau über ein definiert elastisches Steuerlaqer (11) gehaltenen unteren Dreieckslenker (12,13) und einem von diesem losgelösten, in Gelenken (15, 16) am Radträger (9) und am Fahrzeugaufbau gelagerten Stablenker (14) besteht, wobei mit dem unteren Dreieckslenker (12,13) mindestens ein Stellelement (6) unmittelbar über das Steuer Lager (11) verbunden ist.

2. Radaufhängung für lenkbare Hinterräder von Kraftfahrzeugen mit einem das Rad (4,5) lagernden Radträger (9), der mit dem Fahrzeugaufbau über Radführungsglieder (2a,3a) verbunden ist, die jeweils mehrere Lenkerarme (12a, 13a und 17a und 18a) umfassende obere und untere Querlenker aufweisen, und über ein Stellelement (6) der Radträger (a) um eine Schwenkachse (L) verstellbar ist, dadurch gekennzeichnet, daß der untere Querlenker aus einem aufgelösten, zwei Lenkerarme (17a und 18a) umfassenden Dreickslenker besteht das obere Radführungsglied (2a) aus einem am Fahrzeugaufbau über ein definiert elastisches Steuerlager (11) gehaltenen oberen Dreieckslenker (12a,13a) und einem von diesem losgelösten, in Gelenken (14b, 14a) am Radträger (9) und am Fahrzeugaufbau gehaltenen Stablenker (14) besteht, und mit dem oberen Dreieckslenker (12a,13a) mindestens ein Stellelement (6) unmittelbar über das Steuerlager (11) verbunden ist.

3. Radauthängung nach den Ansprüchen 1 oder 2, dadurch gekennzeichnet, daß die Längsachsen (30, 31) der Lenkerarme (17,18; 12a,13a) des oberen Radführungsgliedes (2; 2a) und die Längsachsen (32, 33) der Lenkerarme (12, 14 oder 17a, 18a) des unteren Radführungsgliedes (3 oder 3a) eine durch die jeweiligen Schnittpunkte (34, 35) verlaufende elastokinematische Schwenkachse (36) ergeben, die einen Drehpol (38) - in bezug auf die Fahrtrichtung (F) - hinter der senkrechten Radmittenquerebene (39) und außerhalb der Spurweite (S) ergeben.

4. Radaufhängung nach den Ansprüchen 1, 2 oder 3, dadurch gekennzeichnet, daß das Stellelement (6) etwa in der jeweiligen horizontalen Ebene des Radführungsgliedes (2, 3 bzw. 2a, 3a) angeordnet und mit den gegenüberliegenden gleichen Lenkern des Radführungsgliedes verbunden ist.

5. Radaufhängung nach den Ansprüchen 1 und/oder 3, dadurch gekennzeichnet, daß das Stellelement (6) mit einem - in bezug auf die Fahrtrichtung (F) - hintenliegenden zweiten Lenkerarm (13) des Dreieckslenkers (3) verbunden ist, dem der Stablenker (14) benachbart zugeordnet ist (Fig 2).

6. Radaufhängung nach den Ansprüchen 1 und/oder 3, dadurch gekennzeichnet, daß das Stellelement (6) mit einem - in bezug auf die Fahrtrichtung (F) - vornliegenden ersten Lenkerarm (12) des Dreieckslenkers (3) verbunden ist, wobei der Stablenker (14) vor diesem Lenkerarm (12) liegend angeordnet ist (Fig. 6).

7. Radaufhängung nach einem oder mehreren der vorhergehenden Ansprüche, dadurch gekennzeichnet, daß dem unteren Dreieckslenker - in bezug auf auf die Fahrtrichtung (F) - benachbart der hinten liegende Stablenker (14) zugeordnet ist.

8. Radaufhängung nach den Ansprüchen 1 und/oder 3, dadurch gekennzeichnet, daß das Feder- und Dämpferbein (25) mit seinem unteren Ende (24) am Stablenker (14) abgestützt ist.

9. Radaufhängung nach den Ansprüchen 1 und/oder 3, dadurch gekennzeichnet, daß das Feder- und Dämpferbein (25) zwischen dem hintenliegenden zweiten Lenkerarm (13) des Dreieckslenkers (3) und dem benachbarten Stablenker (14) mit seinem unteren Ende (24) am Radträger (9) abgestützt ist.

10. Radaufhängung nach den Ansprüchen 1 und/oder 3 und 6, dadurch gekennzeichnet, daß das Feder- und Dämpferbein (25) am hintenliegenden zweiten Lenkerarm (13) des Dreieckslenkers (3) mit seinem unteren Ende (24) abgestützt ist (Fig. 6).

11. Radaufhängung nach Anspruch 1, dadurch gekennzeichnet, daß das Feder- und Dämpferbein (25) zwischen dem ersten und zweiten Lenkerarm (12 und 13) des Dreieckslenkers (3) mit seinem unteren Ende (24) abgestützt und - in bezug auf die Fahrtrichtung (F) - vor einer Raddrehachse (L) angeordnet ist.

12. Radaufhängung nach den Ansprüchen 2 und/oder 3, dadurch gekennzeichnet, daß das Stellelement (6) - in bezug auf die Fahrtrichtung (F) - mit dem hintenliegenden zweiten Lenkerarm (13a) des Dreieckslenkers (2a) verbunden ist und der Stablenker (14) diesem Lenkerarm (13a) benachbart angeordnet ist (Fig. 8).

13. Radaufhängung nach den Ansprüchen 2 und/oder 3, dadurch gekennzeichnet, daß das Stellelement (6) - in bezug auf die Fahrtrichtung (F) - mit dem vorderen ersten Lenkerarm (12a) des Dreieckslenkers (2a) verbunden ist und diesem benachbart der Stablenker (14) vorgeschaltet ist (Fig. 9).

14. Radaufhängung nach den Ansprüchen 2 und/oder 3, dadurch gekennzeichnet, daß das Feder- und Dämpferbein (25) zwischen den Lenkerarmen (17a, 18a) des unteren aufgelösten Querlenkers (3a) mit seinem unteren Ende (24)am Radträger (9) abgestützt ist.

15. Radaufhängung nach einem oder mehreren der vorhergehenden Ansprüche, dadurch gekennzeichnet, daß der Stablenker (14) zum benachbarten Lenkerarm des unteren oder oberen Querlenkers (2, 3; 2a, 3a) zur Radaußenseite hin divergierend verläuft.

16. Radaufhängung nach einem oder mehreren der vorhergehenden Ansprüche, dadurch gekennzeichnet, daß der Stablenker (14) zum benachbarten Lenkerarm des unteren oder oberen Querlenkers (2, 3; 2a, 3a) zur Radinnenseite hin divergierend verläuft.

17. Radaufhängung nach einem oder mehreren der vorhergehenden Ansprüche, dadurch gekennzeichnet, daß der Stablenker (14) - in bezug auf die senkrechte Radmittenquerebene - hinter dieser Ebene und hinter einer Radschwenkachse (40), die durch den Schnittpunkt (34) der oberen Lenkerarme (17 und 18) des Querlenkers (2) sowie durch den radträgerseitigen Lagepunkt (8) des unteren Dreieckslenkers (3) verläuft, angeordnet ist.

## Claims

1. A suspension for stecrable rear whells of motor vehicles with a wheel support (9) bearing the wheel (4 and 5) and connected to the vehicle body by way of wheel-guide members (2, 3) which each have upper and lower transverse support arms comprising a plurality of arms (17, 18 and 12, 13), the wheel support (9) being adjustable about a pivot axis (L) by way of an adjustment member (6), **characterized is that** the upper transverse support arm comprises a separated triangular support (17, 18) and the lower wheel-guide member (3) comprises a lower triangular support arm (12, 13), articulated at two points on the vehicle body and held on the vehicle body by way of a control bearing (11) resilient to a defined extent, and a support rod (14) detached from the said triangular support arm (12, 13) and mounted in joints (15, 16) on the wheel support (9) and on the vehicle body, at least one adjustment member (6) being directly connected to the lower triangular support arm (12, 13) by way of the control bearing (11).

2. A suspension for stecrable rear wheels of motor vehicles with a wheel support (9) bearing the wheel (4, 5) and connected to the vehicle body by way of wheel-guide members (2a, 3a) which each have upper and lower transverse support arms comprising a plurality of arms (12a, 13a, and 17a and 18a), the wheel support (a) being adjustable about a pivot axis (L) by way of an adjustment member (6), **characterized in** **that** the lower transverse support arm comprises a separated triangular support arm comprising two arms (17a and 18a), the upper wheel-guide member (2a) comprises an upper triangular support arm (12a, 13a), held on the vehicle body by way of a control bearing (11) resilient to a defined extent, and a support rod (14) detached from the said triangular support arm (12a, 13a) and held in joints (14b, 14a) on the wheel support (9) and on the vehicle body, and at least one adjustment member (6) is directly connected to the upper triangular support arm (12a, 13a) by way of the control bearing (11).

3. A wheel suspension according to Claim 1 or 2, **characterized in that** the longitudinal axes (30, 31) of the support arms (17, 18, 12a, 13a) of the upper wheel-guide member (2; 2a) and the longitudinal axes (32, 33) of the support arms (12, 14 or 17a, 18a) of the lower wheel-guide member (3 or 3a) result in an elastokinematic pivot axis (36) extending through the respective points of intersection (34, 35) and resulting in a centre of rotation (38) behind the vertical median transverse plane (39) of the wheel - relative to the direction of travel (F) and outside the wheel base (S).

4. A wheel suspension according to Claims 1, 2 or 3, **characterized in that** the adjustment member (6) is arranged substantially in the respective horizontal plane of the wheel-guide member (2, 3 and 2a, 3a respectively) and is connected to the opposite similar support arms of the wheel-guide member.

5. A wheel suspension according to Claims 1 and/or 3, **characterized in that** the adjusment member (6) is connected to a second arm (13) of the triangular support arm (3) which is towards the rear with respect to the direction of travel (F) and with which the support rod (14) is associated adjacent thereto (Fig 2)

6. A wheel suspension according to Claims 1 and/or 3, **characterized in that** the adjustment member (6) is connected to a first arm (12) of the triangular support arm (3) towards the front with respect to the direction of travel (F), the support rod (14) being arranged lying in front of the said support arm (12) (Fig 6).

7. A wheel suspension according to one or more of the preceding Claims, **characterized** **in that** the support rod (14) towards the rear is associated with the lower triangular support arm and adjacent thereto with respect in the direction of travel (F).

8. A wheel suspension according to Claims 1 and/or 3, **characterized in that** the telescopic shock-absorber leg (25) is supported at its lower end (24) on the support rod (14).

9. A wheel suspension according to Claims 1 and/or 3, **characterized in that** the telescopic shock-absorber leg (25) is supported at its lower end (24) on the wheel support (9) between the second arm (13) of the triangular support arm (3) towards the rear and the adjacent support rod (14).

10. A wheel suspension according to Claims 1 and/or 3 and 6, **characterized in that** the telescopic shock-absorber leg (25) is supported at its lower end (24) on the second arm (13) of the triangular support arm (3) towards the rear.

11. A wheel suspension according to Claim 1, **characterized** **in that** the telescopic shock-absorber leg (25) is supported at its lower end (24) between the first and second arms (12 and 13) of the triangular support arm (3), and is arranged in front of a rotational axis (L) of the wheel with respect to the direction of travel (F).

12. A wheel suspension according to Claims 2 and/or 3, **characterized in that** the adjustment member (6) is connected to the second arm (13a) of the triangular support arm (2a) towards the rear with respect to the direction of travel (F), and the support rod (14) is associated with the said support arm (13a) adjacent thereto (Fig. 8).

13. A wheel suspension according to Claims 2 and/or 3, **characterized in that** the adjustment member (6) is connected to the first arm (12a) of the triangular support arm (2a) towards the front with respect to the direction of travel (F), and the support rod (14) is arranged in front of the said support arm (12a) and adjacent thereto (Fig. 9).

14. A wheel suspension according to Claims 2 and/or 3, **characterized in** **that** the telescopic shock-absorber leg (25) is supported at its lower end (24) on the wheel support (9) between the arms (17a, 18a) of the lower separated transverse support arm (3a).

15. A wheel suspension according to one or more of the preceding Claims, **characterized** **in that** the support rod (14) extends to the adjacent arm of the lower or upper transverse support arm (2, 3, 2a, 3a) while diverging towards the outside of the wheel.

16. A wheel suspension according to one or more of the preceding Claims, **characterized** **in that** the support rod (14) extends to the adjacent arm of the lower or upper transverse support arm (2, 3; 2a, 3a) while diverging towards the inside of the wheel.

17. A wheel suspension according to one or more of the preceding Claims, **characterized** **in that** - with respect to the vertical median transverse plane of the wheel - the support rod (14) is arranged behind the said plane and behind a pivot axis (40) of the wheel extending through the point of intersection (34) of the upper arms (17 and 18) of the transverse support arm (2) and through the bearing point (8) of the lower triangular support arm (3) towards the wheel support.

## Revendications

1. Suspension de roues arrières directrices de véhicule automobile, avec un support de roue (9) servant de montage de palier à la roue (4, 5), relié à la carrosserie du véhicule par l'intermédiaire d'organes de guidage de roues (2, 3), présentant des bras d'articulation supérieurs et inférieurs comprenant chacun plusieurs tiges d'articulation (17, 18 et 12, 13), et le support de roue (9) étant réglable autour d'un axe de pivotement (L), par l'intermédiaire d'un élément de réglage (6), caractérisée en ce que le bras d'articulation supérieur est composé d'un triangle ouvert (17, 18) et l'organe de guidage de roues inférieur (3) est composé d'un triangle inférieur (12, 13), articulés en deux points sur la carrosserie du véhicule, monté, par l'intermédiaire d'un palier de commande (11) à élasticité définie, sur la carrosserie du véhicule, et est composé d'une tringle d'articulation (14) séparée du triangle (12, 13), montés à rotation dans les articulations (15, 16) sur le support de roue (9) et sur la carrosserie du véhicule, au moins un élément de réglage (6) étant relié au triangle inférieur (12, 13), par l'intermédiaire du palier de commande (11).

2. Suspension de roues arrières directrices de véhicule automobile, avec avec un support de roue (9) servant de montage à rotation à la roue (4, 5), relié à la carrosserie du véhicule par l'intermédiaire d'organes de guidage de roues (2a, 3a), présentant des bras de direction supérieurs et inférieurs comprenant chacun plusieurs tiges d'articulation (12a, 13a et 17a, 18a), et le support de roue (a) étant réglable autour d'un axe de pivotement (L) par l'intermédiaire d'un élément de réglage (6), caractérisée en ce que le bras d'articulation inférieur est composé d'un triangle ouvert comportant deux tiges (17a et 18a), que l'organe de guidage de roues supérieur (2a) est composé d'un triangle supérieur (12a, 13a), fixé par l'intermédiaire d'un palier de commande (11) à élasticité définie, sur la carrosserie du véhicule, et d'une tringle d'articulation (14) séparée du triangle (12a, 13a), montés dans les articulations (14b, 14a) sur le support de roue (9) et sur la carrosserie du véhicule, et au moins un élément de réglage (6) étant relié triangle supérieur (12a, 13a), directement par l'intermédiaire du palier de commande (11).

3. Suspension arrière selon la revendication 1 ou 2 caractérisée en ce que les axes longitudinaux (30,31) des bras d'articulation (17,18;12a,13a) de l'organe de guidage de roue supérieur (2;2a) et les axes longitudinaux (32,33) des bras d'articulation (12,14 ou 17a,18a) de l'organe de guidage de roue inférieur (3 ou 3a) forment un axe de pivotement élastocinématique (34,35), passant par les ponts d'intersection (34,35) résultant, ce qui donne un centre de rotation (38) situé - par rapport à la direction de roulage (F) - derrière le plan transversal médian vertical de roue (39) et hors de la voie (S).

4. Suspension de roues selon les revendications 1, 2 ou 3 caractérisée en ce que l'élément de réglage (6) est disposé à peu près dans le plan horizontal de l'organe de guidage de roues (2,3, ou 2a, 3a) et est relié aux mêmes bras d'articulation, situé de l'autre côté, de l'organe de guidage de roues.

5. Suspension de roues selon la revendication 1 et/ou 3, caractérisée en ce que l'élément de réglage (6) est relié à un deuxième bras d'articulation (13) du triangle, disposé à l'arrière - par rapport à la direction de roulage (F) -, auquel est associée, voisine, la tringle d'articulation (14) (figure 2)

6. Suspension de roues selon la revendication 1 et/ou 3 caractérisée en ce que l'élément de réglage (6) est relié à un premier bras d'articulation (12), situé - par rapport à la direction de roulage (F) - à l'avant du triangle (3), la tringle d'articulation (14) étant disposée horizontalement, devant ce bras d'articulation (12) figure (6).

7. Suspension de roues selon une ou plusieurs des revendication précédentes caractérisée en ce que la tringle d'articulation (14) située à l'arrière -par rapport à la direction de roulement (F)- est associée, voisine, au triangle inférieur.

8. Suspension de roues selon la revendication 1 et/ou 3 caractérisée en ce que la jambe élastique et d'amortisseur (25) prend appui sur la tringle d'articulation (14), par son extrémité inférieure (24).

9. Suspension de roues selon la revendication 1 et/ou 3 caractérisée en ce que la jambe élastique et d'amortisseur (25) prend appui, par son extrémité inférieure (24), sur le support de roue (9), entre le deuxième bras d'articulation (13), situé à l'arrière, du triangle (3) et la tringle d'articulation (14) voisine.

10. Suspension de roues selon la revendication 1 et/ou 3 et 6, caractérisée en ce que la jambe élastique et d'amortisseur (25) prend appui, par son extrémité inférieure (24), sur le deuxième bras d'articulation (13), situé à l'arrière, du triangle (3) (figure 6).

11. Suspension de roues selon la revendication 1, caractérisée en ce que la jambe élastique et d'amortisseur (25) prend appui, par son extrémité inférieure (24), entre le premier et le deuxième bras d'articulation (12 et 13) du triangle (3) et est disposée -par rapport à la direction de roulage (F)- à l'avant d'un axe de rotation de roues (L).

12. Suspension de roues selon la revendication 2 et/ou 3 caractérisée en ce que l'élément de réglage (6) est relié au deuxième bras d'articulation (13a) disposé à l'arrière -par rapport à la direction de roulement (F)-, du triangle (2a) et la tringle d'articulation (14) étant disposée au voisinage de ce bras d'articulation (13a) (figure 8).

13. Suspension de roues selon la revendication 2 et/ou 3 caractérisée en ce que l'élément de réglage (6) est relié au premier bras d'articulation (12a) situé à l'avant -par rapport à la direction de roulement (F)- du triangle (2a) et intercalé par rapport à celui-ci, au voisinage de la tringle d'articulation (14) (figure 9).

14. Suspension de roues selon la revendication 2 et/ou 3 caractérisée en ce que la jambe élastique et d'amortisseur (25) prend appui, par son extrémité inférieure (24), sur le support de roue (9), entre les bras d'articulation (17a, 18a) du bras d'articulation transversal inférieur ouvert (3a).

15. Suspension de roues selon une ou plusieurs des revendications précédentes, caractérisée en ce que la tringle d'articulation (14) s'étend de façon divergeante vers le côté extérieur de la roue, par rapport au bras d'articulation voisin du triangle inférieur ou supérieur (2, 3; 2a, 3a).

16. Suspension de roues selon une ou plusieurs des revendications précédentes, caractérisée en ce que la tringle d'articulation (14) s'étend de façon divergeante par rapport au côté intérieur de la roue, par rapport au bras d'articulation voisin du triangle inférieur ou supérieur (2, 3; 2a, 3a).

17. Suspension de roues selon une ou plusieurs des revendications précédentes, caractérisée en ce que la tringle d'articulation (14) est disposée -par rapport au plan transversal médian vertical de roues- derrière ce plan et derrière un axe de pivotement de roues (40), passant par le point d'intersection (34) des bras d'articulation supérieurs (17, et 18) du triangle (2) ainsi que par le centre de rotation (8), situé côté moyeu de roue, du triangle inférieur (3).
